# EUROPEAN PATENT SPECIFICATION

(11) **EP 0 527 902 B1**
(45) Date of publication and mention of the grant of the patent: **14.08.1996**
(21) Application number: 91909777.4
(22) Date of filing: 08.05.1991
(51) Int. Cl.: C08G 69/48, C08L 77/00

(54) **POLYMER MATERIAL AND A PROCESS FOR ITS PRODUCTION**
KUNSTSTOFFMATERIAL UND VERFAHREN ZUR HERSTELLUNG
MATERIAU POLYMERE ET SON PROCEDE DE PRODUCTION

(30) Priority: 11.05.1990 SE 9001707
(43) Date of publication of application: 24.02.1993
(73) Proprietor: PLM AB, S-201 80 Malmö (SE)
(72) Inventor: FRANDSEN, Erik, Dk-5260 Odense S (DK); MAZZONE, Rolando, DK-5466 Asperup (DK)
(74) Representative: Rostovanyi, Peter
(86) International application number: SE9100329
(87) International publication number: WO9118039

(56) References cited:
- WO-A-89/06664
- Dialog Information Services, File 351, World Patent Index 81-90, Dialog accession No. 90-069636/10, TOYOBO KK: "Polyamide resin compsn. with good gas barrier property etc. - comprises xylene gp.contg. polyamide and modified vinyl aromatic-olefin block copolymer", JP 2020555, A, 900124, 9010 (Basic).
- CHEMICAL ABSTRACTS, Volume 107, No. 26, 28 December 1987, (Columbus, Ohio, US), ANON.: "Heat treatment of amorphous nylon to improve oxygen barrier", see page 36, abstract 237796e, & Res.Discl., 1987, 279, 418

## Description

The present invention relates to a polymer material with increased reaction sensitivity comprising a polyamide.

in the plastics and polymer sectors, considerable work and resources have been devoted to the development of plastic materials capable of preventing thermal degradation during processing, for example by oxidation or the influence of UV radiation. As a rule, these stabilizing effects are achieved by additives to polymers.

However, within the plastics sector there are also needs for non-stabilized plastics material, i.e. plastics material with increased reaction sensitivity.

Chemical Abstracts, Vol 107, No. 237796e discloses heating an amorphous nylon film at temperatures above the glass transition temperature, thereby achieving an improvement in 0 barrier properties.

The present invention provides a polymer material as defined in the preamble of claim 1, and having the features appearing from the characterizing clause of claim 1.

Further, the present invention provides a process for producing said polymer material as defined in the preamble of claim 4, and having the features appearing from the characterizing clause of claim 4.

According to the present invention, there is provided a polyamide-based material which consists of a partially split or broken down polyamide. The term "partially split" or "partially broken down" imply that a fraction of the molecules and/or the groups in the polyamide chain have become dissociated, with a restructuring as a consequence. According to the present invention, this increased reaction sensitivity is employed and the present invention finds practical application within all areas in which the absence of compounds or substances with chemical affinity to the split polyamide is advantageous.

As non-restricting examples of fields of application for the polymer material according to the present invention, mention might be made of construction material for panels, containers (trays, cans, bottles, etc), sheets, foils, caps etc. in most cases, the increased sensitivity of the material to reaction with oxygen, i.e. its affinity to oxygen is employed by causing a space which it is intended to exclude from the action of an oxygenaceous environment, to be surrounded by walls or other defining means including the polymer material. As one among many examples, mention will be made of a container (package) for perishable goods which deteriorate if they are exposed to oxygen (for example coffee). The entire container or package need not, naturally, consist of the material, it being quite sufficient if the container displays one layer thereof.

According to one preferred embodiment, the polymer material is present as a "masterbatch" to which, prior to forming into objects of, for instance, the above-described type, is added other polymer or polymers, possibly together with conventional additives (fillers, reinforcing agents, colourants, etc). It will readily be perceived that the mixing process will be facilitated if both the polymer material according to the present invention and the polymer or polymers which are to be admixed display the same physical form, such as granulate form. Thereby, it will thus be possible in a very simple manner to impart to polymer materials properties which they did not originally possess. This increases flexibility in the choice of materials, at the same time as both raw materials costs and manufacturing costs may be controlled. The explanation for this is that it has proved, at least in certain practical applications (for example in packages) that a quantity of "masterbatch" amounting to 5 weight-% or less will be fully sufficient to achieve the contemplated results.

The polymer material according to the present invention has been obtained by partial splitting of a polyamide. The polyamides which are subjected to partial splitting are commercially available and may be of both aromatic and aliphatic nature. So-called copolyamides, i.e. copolymers of polyamides and other polymers are also suitable starting materials for the partial splitting.

One preferred aromatic polyamide (as starting material) is a polymer which has been obtained by polymerization of meta-xylylene-diamine of the formula H₂NCH₂-m-C₆H₄-CH₂NH₂ and adipic acid of the formula H0₂C(CH₂)₄ CO₂H, for example a product manufactured and marketed by Mitsubishi Gas Chemical Company, Japan, under the designation MXD6. Preferred polyamides of aliphatic nature are nylon 6 (PA 6) and nylon 6.6 (PA 66). The choice of polymer is not critical, being rather determined by economic factors.

The above-mentioned partial splitting is realized in that a polyamide is caused to react with a nucleophilic reagent as defined in claim 1, possibly in the presence of an activator, preferably under the melting conditions of the polyamide.

The polymer material according to the invention is, thus, produced in that a polyamide is caused to react with a nucleophilic reagent, possibly in the presence of an activator in the form of a hydrogen donor, under such conditions that a uniform homogeneous polyamide product or an unhomogeneous polyamide product is obtained. According to a preferred embodiment, the reaction is carried out in an extruder in which the reaction temperature, during at least part of the reaction, exceeds the melting temperature of the polyamide component. In such instance, the polyamide is present in granulate form or powder form (particulate form), while the nucleophilic reagent and the possible activator are present in granulate form, as powder or as a liquid. The choice of the nucleophilic reagent and, where applicable, the activator, is critical inasmuch as the nucleophilic reagent and the activator must be stable up to the melting point of the polyamide component.

The nucleophilic reagent is selected from the group consisting of compounds containing at least one hydroxyl group, compounds containing at least one alkoxide group, phosphate compounds, pyrophosphate compounds, polyphosphate compounds and salts of organic acids ; especially preferred is a copolymer of vinyl alcohol and ethylene (EVOH). As activator (hydrogen donor), use may be made of any optional activator, but with the proviso that this is stable up to the melting point of the polyamide component. As preferred examples, mention might be made of compounds containing at least one carboxyl group, such as polycarboxylic acids, dicarboxylic acids, or simple carboxylic acids.

One preferred aliphatic carboxylic acid is adipic acid, and one preferred aromatic carboxylic acid is phthalic acid (together with their isomers). Fatty acids, such as stearic acid have proved to be very appropriate. An extremely appropriate activator according to the present invention is marketed under the trade name "Admer QF 551".

A person skilled in this art will readily perceive that the nucleophilic reagent and the activator may be selected from a large number of compounds, but that this number is drastically restricted as a consequence of the requirement on stability at the melting point of the polyamide. A guiding value of the melting point (for selection of "stable" reagent) is approx. 250 °C, with variations in both directions by roughly 10 oC. The stability requirement may also be expressed such that the nucleophilic reagent and, where applicable, the activator must have a retained capacity to react with the polyamide at temperature conditions around the melting temperature of the polyamide.

As was mentioned above, the selection is made according to one preferred embodiment, of the nucleophilic reagent from among salts of organic acids alcohols and phosphate compounds. As representative examples of compounds within these categories and while observing the stability requirement, mention might be made of ionomeric materials of such types as are marketed under the trade mark "Surlyn"; calcium stearate; tetraethylene pentamine; polyethylene glycol 400 or 600; EVOH and tetrasodium phosphate.

As was mentioned above, the polymer material according to the invention is present, in one preferred embodiment, as a masterbatch to which is added other polymer or polymers, these latter often being designated matrix or structure polymers. As a non-restrictive quantity interval for the split polyamide, mention might be made of from 1-15 weight-%, smaller quantities being, however, as a rule preferred, ideally within the range of between 1 and 5 weight-%.

As non-restrictive examples of matrix or structure polymers, mention might be made of polyethylene terephthalate (PET), polyethylene, polypropylene and polyamide. In order to improve homogeneity, use is made in certain cases of a so-called compatibilizer, for example an ionomer of Surlyn type.

Prior to admixing in the structure polymer, there is incorporated therein, according to one embodiment, an activating metal (oxidation catalyst), such as Co, Fe, Mn, Cu etc, for example in that the structure polymer is mixed in granulate form with a salt of the metal and the thus treated granules are processed (compounded) in an extrusion moulding machine and granulated once again.

According to another embodiment, there is incorporated, prior to admixing in the structure polymer, an activating metal (oxidation catalyst), such as Co, Fe, Mn, Cu, etc in the partially split polyamide, for example in the same way as in the case of the structure-polymer, as has been described above. In this embodiment, the masterbatch must be protected from the effects of oxygen from production to use, for example by being packed in bags of aluminium foil.

According to yet a further embodiment, no active admixture of metal compound takes place in the structure polymer, reliance being instead placed on those residual quantities of metal which are already present in the polymer and which derive from catalysts employed in the manufacture of the structure polymer. The granules of the structure polymer and the granules of the split (activated) polyamide are thereafter mixed in suitable proportions.

The mixing of structure polymer and polyamide is suitably effected in that each of the components is mixed in the molten state. For example, both of the polymers may initially be present individually as granules or pellets. Each one of the components is weighed separately and thereafter physically mixed in a suitable device, possibly with additives. After possible drying, a substantially uniform polymer melt mixture is achieved. A suitable method of forming the "mixture" is by melting-extrusion. In the extruder, the polymers are mixed in the molten state and, thereafter, the mixture is extruded in the form of a strand which, after "hardening", may be cut or otherwise comminuted to granules or pellets which may thereafter be formed into objects in a conventional manner. The temperature in the extruder is adapted to the properties of the polymers and is, as a rule, between 200 and 400 °C, suitably between 230 and 300 °C and preferably between 240 and 270 °C.

The present invention will be explained in greater detail hereinbelow, with reference to non-restrictive examples.

### EXAMPLE I

### Production of partially split polyamide (masterbatch)

Granulate of nucleophilic reagent (e.g. Selar OH 3003 (EVOH), 10 weight-%), possible activator (e.g. Admer QF 551, 2 weight-%) and polyamides (e.g. MXD6 6001, remainder) were mixed and extruded using an extruder (AXON, type BX-25) with single screw and five heating zones (235-245 °C, 240-250 °C, 240-250 °C, 240-250 °C, 250-260 °C), in the form of strands which were subsequently comminuted in a granulator. The thus produced granulate was dried at 70 °C for 4-5 hours and air-tight packed in bags of aluminium foil.

The above example was repeated, with the exception that the following nucleophilic reagents were used in a concentration of between 1 and 15 weight-%, together with the polyamides listed below. In those cases when an activator was employed, this consisted of "Admer QF 551" and was added in an amount of between 1 and 2 weight-%. The polyamide constituted the remainder.

| **Example** | **Nucleophilic reagent** | **Activator** | **Polyamide** |
|---|---|---|---|
| 2 | EVOH | Yes | PA6 |
| 3 | EVOH | Yes | PA6.6 |
| 4 | Polyethylene glycol 400 | Yes | MXD6 |
| 5 | Polyethylene glycol 600 | Yes | MXD6 |
| 6 | Polypropylene glycol 425 | Yes | MXD6 |
| 7 | "Surlyn 1706" | - | MXD6 |
| 8 | "Surlyn 1706" | - | PA6 |
| 9 | "Surlyn 1706" | - | PA6.6 |
| 10 | Tetrasodium diphosphate | - | MXD6 |

In order to evaluate the reaction propensity to oxygen, containers were produced from a mixture of PET and each respective polyamide produced according to examples 1-10. In certain cases, the PET employed was "doped" with cobalt (approx. 150 ppm) and the weight relationship between PET and polyamide was approx. 95:5. The containers (1.5 1) were manufactured by conventional blow moulding. Each container was subjected to so-called OTR measurement (Oxygen Transmission Rate) according to standards. OTR is expressed in cc/24h. In all experiments, a value of below 0.001 was obtained.

For containers produced from 100% PET and PET/MXD6 (95:5) OTR values of 0.08 and 0.05, respectively, were measured.

## Claims

1. A polymer material with increased sensitivity to reaction with oxygen comprising a polyamide, **characterized** in that said polyamide is a partially split polyamide, which has been obtained by causing a polyamide to react with a nucleophilic reagent and possibly an activator, said nucleophilic reagent being selected from the group consisting of compounds containing at least one hydroxyl group, compounds containing at least one alkoxide group, phosphate compounds, pyrophosphate compounds, polyphosphate compounds, salts of organic acids and a copolymer of vinyl alcohol and ethylene, and said activator being in the form of a hydrogen donor.

2. The material as claimed in claim 1, **characterized** in that the activator is a compound containing at least one carboxyl group.

3. The material as claimed in claim 1 or 2, **characterized** in that the nucleophilic reagent and the activator are stable up to the melting point of the polyamide.

4. A process for producing a polymer material with increased sensitivity to reaction with oxygen comprising a polyamide, **characterized** in that a polyamide is caused to react with a nucleophilic reagent selected from the group consisting of compounds containing at least one hydroxyl group, compounds containing at least one alkoxide group, phosphate compounds, pyrophosphate compounds, polyphosphate compounds, salts of organic acids and a copolymer of vinyl alcohol and ethylene, possibly in the presence of an activator in the form of a hydrogen donor, under such conditions that a uniform, homogeneous polyamide product or an unhomogeneous polyamide product is obtained.

5. The process as claimed in claim 4, **characterized** in that the polyamide, the nucleophilic reagent and the possible activator are present in granulate form, or as powder, and that the reaction is undertaken in an extruder.

6. The process as claimed in claim 4 or 5, **characterized** in that the reaction temperature during at least a part of the reaction exceeds the melting temperature of the polyamide component.

7. The process as claimed in anyone of claims 4-6, **characterized** in that the nucleophilic reagent and the activator are stable up to the melting point of the polyamide.

## Patentansprüche

1. Polymermaterial mit erhöhter Reaktionsempfindlichkeit gegenüber Sauerstoff, das ein Polyamid enthält, dadurch gekennzeichnet, daß das Polyamid ein teilweise gespaltenes Polyamid ist, das durch Reagierenlassen eines Polyamids mit einem nukleophilen Reagenz und ggf. einem Aktivator erhalten worden ist, wobei das nukleophile Reagenz ausgewählt ist aus der Gruppe bestehend aus Verbindungen mit wenigstens einer Hydroxygruppe, Verbindungen mit wenigstens einer Alkoxygruppe, Phosphatverbindungen, Pyrophosphatverbindungen, Polyphosphatverbindungen, Salzen organischer Säuren, und einem Copolymer aus Vinylalkohol und Ethylen, wobei der Aktivator ein Wasserstoffdonor ist.

2. Material nach Anspruch 1, dadurch gekennzeichnet, daß der Aktivator eine Verbindung ist, die wenigstens eine Carboxygruppe enthält.

3. Material nach Anspruch 1 oder 2, dadurch gekennzeichnet, daß das nukleophile Reagenz und der Aktivator bis zum Schmelzpunkt des Polyamids stabil sind.

4. Verfahren zum Herstellen eines Polymermaterials mit erhöhter Reaktionsempfindlichkeit gegenüber Sauerstoff, das ein Polyamid enthält, dadurch gekennzeichnet, daß ein Polyamid reagieren gelassen wird mit einem nukleophilen Reagenz ausgewählt aus der Gruppe bestehend aus Verbindungen mit wenigstens einer Hydroxygruppe, Verbindungen mit wenigstens einer Alkoxygruppe, Phosphatverbindungen, Pyrophosphatverbindungen, Polyphosphatverbindungen, Salzen organischer Säuren, und einem Copolymer aus Vinylalkohol und Ethylen, ggf. in Gegenwart eines Wasserstoffdonors als Aktivator, wobei das Reagierenlassen unter solchen Bedingungen erfolgt, daß ein gleichförmiges, homogenes Polyamidprodukt oder ein nicht homogenes Polyamidprodukt erhalten wird.

5. Verfahren nach Anspruch 4, dadurch gekennzeichnet, daß das Polyamid, das nukleophile Reagenz und ggf. der Aktivator in Granulatform oder als Pulver zugegen sind und daß die Reaktion in einem Extruder ausgeführt wird.

6. Verfahren nach Anspruch 4 oder 5, dadurch gekennzeichnet, daß die Reaktionstemperatur wenigstens während eines Teils der Reaktion die Schmelztemperatur der Polyamidkomponente übersteigt.

7. Verfahren nach einem der Ansprüche 4 bis 6, dadurch gekennzeichnet, daß das nukleophile Reagenz und der Aktivator bis zum Schmelzpunkt des Polyamids stabil sind.

## Revendications

1. Matériau polymère présentant une sensibilité de réaction avec de l'oxygène plus élevée comprenant un polyamide, caractérisé en ce que ledit polyamide est un polyamide partiellement coupé qui a été obtenu en faisant réagir un polyamide avec un réactif nucléophile et éventuellement un activateur, ledit réactif nucléophile étant choisi parmi des composés contenant au moins un groupe hydroxyle, des composés contenant au moins un groupe alcoxyde, des composés de phosphate, des composés de pyrophosphate, des composés de polyphosphate, des sels d'acides organiques et un copolymère d'alcool vinylique et d'éthylène et ledit activateur étant dans la forme d'un donneur d'hydrogène.

2. Matériau selon la revendication 1, caractérisé en ce que l'activateur est un composé contenant au moins un groupe carboxyle.

3. Matériau selon la revendication 1 ou 2, caractérisé en ce que le réactif nucléophile et l'activateur sont stables jusqu'au point de fusion du polyamide.

4. Procédé de production d'un matériau polymère présentant une sensibilité de réaction avec l'oxygène plus élevée comprenant un polyamide, caractérisé en ce qu'on fait réagir un polyamide avec un réactif nucléophile choisi parmi des composés contenant au moins un groupe hydroxyle, des composés contenant au moins un groupe alcoxyde, des composés de phosphate, des composés de pyrophosphate, des composés de polyphosphate, des sels d'acides organiques et un copolymère d'alcool vinylique et d'éthylène, éventuellement en présence d'un activateur dans la forme d'un donneur d'hydrogène, dans des conditions telles qu'on obtient un produit de polyamide homogène ou un produit de polyamide non homogène uniforme.

5. Procédé selon la revendication 4, caractérisé en ce que le polyamide, le réactif nucléophile et l'activateur éventuel sont présents dans une forme granulée ou en tant que poudre et en ce qu'on réalise la réaction dans une extrudeuse.

6. Procédé selon la revendication 4 ou 5, caractérisé en ce que la température de réaction pendant au moins une partie de la réaction dépasse la température de fusion du constituant de polyamide.

7. Procédé selon l'une quelconque des revendications 4-6, caractérisé en ce que le réactif nucléophile et l'activateur sont stables jusqu'au point de fusion du polyamide.
